# EUROPÄISCHE PATENTSCHRIFT

(11) **EP 3 381 801 B1**
(45) Veröffentlichungstag und Bekanntmachung des Hinweises auf die Patenterteilung: **22.12.2021**
(21) Anmeldenummer: 17163669.9
(22) Anmeldetag: 29.03.2017
(51) Int. Cl.: B64D 11/00, B64D 11/04

(54) **AUFNAHMEVORRICHTUNG ZUM AUFNEHMEN EINER LEBENSMITTELKOMPONENTE FÜR EINE LEBENSMITTELZUBEREITUNGSMASCHINE, INSBESONDERE FÜR EINE GETRÄNKE/MAHLZEIT-ZUBEREITUNG IN EINER LUFTFAHRZEUG-BORDKÜCHE, UND LEBENSMITTELZUBEREITUNGSMASCHINE**
HOLDING DEVICE FOR HOLDING A FOOD COMPONENT FOR A FOOD PREPARATION MACHINE, IN PARTICULAR FOR A BEVERAGE/MEAL PREPARATION IN AN AEROPLANE KITCHEN, AND FOOD PREPARATION MACHINE
DISPOSITIF DE RÉCEPTION D'UN INGRÉDIENT DE PRODUIT ALIMENTAIRE POUR UNE MACHINE DE PRÉPARATION DE PRODUITS ALIMENTAIRES, EN PARTICULIER POUR UNE PRÉPARATION DE REPAS/DE BOISSONS DANS UN OFFICE D'AÉRONEF ET MACHINE DE PRÉPARATION DE PRODUITS ALIMENTAIRES

(43) Veröffentlichungstag der Anmeldung: 03.10.2018
(73) Patentinhaber: Sell GmbH, 35745 Herborn-Burg (DE)
(72) Erfinder: PODLASIN, Peter, 35239 Steffenberg-Steinperf (DE); SCHÄFER, Thomas, 35112 Fronhausen (DE); ADOMEIT, Siegfried, 35325 Muecke (DE); MUTH, Arno, 35756 Mittenaar Bicken (DE)
(74) Vertreter: Neugebauer, Jürgen

(56) Entgegenhaltungen:
- WO-A1-2011/143682
- US-A1- 2004 021 050
- US-A1- 2010 206 414
- US-A1- 2011 111 107

## Beschreibung

Die vorliegende Erfindung betrifft eine Aufnahmevorrichtung, die zum Aufnehmen mindestens einer Lebensmittelkomponente ausgebildet ist und für eine Lebensmittelzubereitungsmaschine, insbesondere für eine Zubereitung eines Getränks und/oder einer Mahlzeit in einer Bordküche eines Luftfahrzeugs, vorgesehen oder in dieser aufgenommen ist. Außerdem betrifft die Erfindung eine insbesondere für eine Luftfahrzeug-Bordküche vorgesehene Lebensmittelzubereitungsmaschine mit einer Aufnahmevorrichtung.

### Stand der Technik

Heutige Lebensmittelzubereitungsmaschinen für das portionierte Zubereiten eines Getränks und/oder einer Mahlzeit, wie beispielsweise einer Suppe, sind derart ausgestaltet, dass sie eine Aufnahmevorrichtung zum Aufnehmen eines Behälters oder eines Containers mit mindestens einer darin aufgenommenen Lebensmittelkomponente aufweisen. Die Aufnahmevorrichtung ist häufig als eine aus der Lebensmittelzubereitungsmaschine herausziehbare Trägervorrichtung ausgestaltet, die nach Entriegeln der Trägervorrichtung durch manuelles Betätigen eines Drehschiebers oder eines Hebels der Lebensmittelzubereitungsmaschine zumindest teilweise aus einem Gehäuse der Lebensmittelzubereitungsmaschine herausgezogen bzw. ausgefahren werden kann. Nachdem der Behälter oder der Container mit der darin aufgenommenen Lebensmittelkomponente in die herausgezogene bzw. ausgefahrene Trägervorrichtung eingesetzt worden ist, wird die Trägervorrichtung in die Lebensmittelzubereitungsmaschine eingeschoben bzw. eingefahren und anschließend in der eingeschobenen Position durch manuelles Betätigen des Drehschiebers oder Hebels der Lebensmittelzubereitungsmaschine verriegelt.

Wird dieser Drehschieber oder Hebel nicht vollständig in seine verriegelte Position versetzt, so kann sich die Trägervorrichtung insbesondere aufgrund von Erschütterungen oder Stößen lockern und ohne Benutzerbetätigung aus der Lebensmittelzubereitungsmaschine ausfahren. Wenn die Lebensmittelzubereitungsmaschine zur Zubereitung des Getränks und/oder der Mahlzeit mittels Zuführung von unter hohem Druck stehendem heißen Wasser ausgebildet ist, ist es besonders gefährlich, wenn die Trägervorrichtung nicht vollständig in die verriegelte Position versetzt ist. Bekannte mechanische Verriegelungen, die eine sichere Verriegelung gewährleisten, erfordern eine Bedienung mit zwei Händen und/oder beeinträchtigen das optische Erscheinungsbild der Lebensmittelzubereitungsmaschine erheblich.

Bekannte elektrisch betätigte Verriegelungen oder Sensoren zum Erfassen des Verriegelungszustands sind fehleranfällig und wartungsintensiv. Diese Probleme fallen besonders ins Gewicht, wenn die Lebensmittelzubereitungsmaschine in einem Luftfahrzeug betrieben werden soll, in dem einerseits sehr hohe Sicherheitsanforderungen gelten, andererseits aber nur wenig Raum zur Verfügung steht, und die Kabinenbesatzung unter hohem Zeitdruck die Lebensmittelzubereitungsmaschine sehr häufig bedienen muss.

US 2010/206414 A1 beschreibt ein als Dampfgargerät ausgebildetes Haushaltsgerät mit einer Bedienblende, die über eine Verstellvorrichtung an einem Korpus gehalten wird. Die Bedienblende kann aus einer Ruhelage zusammen mit einem Gehäuse mit einem darin aufgenommenen Tank aus dem Korpus in eine exponierte Lage mittels eines als Elektromotor ausgebildeten Antriebs ausgefahren oder in umgekehrter Richtung eingefahren werden. Um den Ausfahrvorgang oder den Einfahrvorgang zu starten, muss ein Benutzer ein als Schalter ausgebildetes Bedienelement an der Bedienblende betätigen.

### Offenbarung der Erfindung

Der vorliegenden Erfindung liegt daher die Aufgabe zugrunde, für eine Lebensmittelzubereitungsmaschine eine Aufnahmevorrichtung zum Aufnehmen mindestens einer Lebensmittelkomponente bereitzustellen, die ein einfaches Erkennen einer unsicheren Verriegelung und somit eine sichere Verriegelung während der Lebensmittelzubereitung gewährleisten und zugleich ein unkontrolliertes Ausfahren der Trägervorrichtung bei einer unsicheren Verriegelung unterbinden kann. Zudem wird angestrebt, dass eine derartige sichere Aufnahmevorrichtung nicht das optische Erscheinungsbild der Lebensmittelzubereitungsmaschine beeinträchtigt.

Die Aufgabe der vorliegenden Erfindung wird durch eine Aufnahmevorrichtung gemäß Anspruch 1 gelöst.

Unter einer aufgebrachten externen Kraft wird eine Kraft verstanden, die von einem an der Vorderseite der Aufnahmevorrichtung, also extern zu der Aufnahmevorrichtung, angeordneten Benutzer auf die an der Vorderseite der Aufnahmevorrichtung angeordnete Frontblende, aufgebracht wird. Die aufgebrachte externe Kraft wird durch den Verriegelungs- und Führungsmechanismus in eine geführte translatorische und/oder rotatorische Bewegung der Trägervorrichtung zusammen mit der Frontblende und/oder eine Bewegung der Frontblende relativ zu der Trägervorrichtung umgesetzt. Die aufgebrachte externe Kraft ist eine extern aufgebrachte Kraft.

Voraussetzung für diese geführte Bewegung und das Versetzen der Trägervorrichtung in einen anderen Zustand ist, dass die jeweilige externe Kraft mit einer jeweiligen vorgegebenen Richtung auf die Frontblende aufgebracht wird. Die vorgegebene Richtung der ersten externen Kraft und die vorgegebene Richtung der zweiten externen Kraft sind zueinander unterschiedlich, mindestens um einen Winkel von 70 Grad, und sind bevorzugt zueinander entgegengesetzt. Bevorzugt stimmt die vorgegebene Richtung der ersten externen Kraft mit der Richtung des Ausfahrens der Trägervorrichtung überein und/oder ist aufwärts, also entgegen der Schwerkraftrichtung, gerichtet. Die vorgegebene Richtung der ersten externen Kraft kann sich gemäß einem vorgegebenen Richtungsverlauf ändern. Wenn beispielsweise die Frontblende an der Trägervorrichtung drehbar gelagert ist, entspricht der vorgegebene Richtungsverlauf einer Drehbewegung der Frontblende von der an der Trägervorrichtung anliegenden Position in die von der Trägervorrichtung hervorstehende Position. Die vorgegebene Richtung der zweiten externen Kraft ist bevorzugt quer zur Ausfahrrichtung der Trägervorrichtung gerichtet, mit einer maximalen Abweichung von 30 Grad. Bevorzugt ist die vorgegebene Richtung der zweiten externen Kraft abwärts, also in Schwerkraftrichtung, gerichtet, wenn die vorgegebene Richtung der ersten externen Kraft der Ausfahrichtung und/oder Aufwärtsrichtung entspricht. Aufgrund der unterschiedlichen vorgegebenen Richtungen kann die zweite externe Kraft unmittelbar, also ohne vorgegebene zeitliche Mindestverzögerung, im Anschluss an die erste externe Kraft aufgebracht werden.

Unter dem unkontrollierten Ausfahren wird ein Ausfahren der Trägervorrichtung ohne Kraftaufbringung auf die Aufnahmevorrichtung durch einen Benutzer aufgrund der Schwerkraft oder aufgrund von Stößen und Erschütterungen verstanden, wie sie beispielsweise während des Betriebs eines Luftfahrzeugs auftreten. Ein kontrolliertes Ausfahren erfordert, dass ein Benutzer der Aufnahmevorrichtung von der Vorderseite der Aufnahmevorrichtung die zweite externe Kraft, auf die Trägervorrichtung, insbesondere auf die Frontblende, aufbringt, um die Trägervorrichtung von dem Sicherungszustand in den Entriegelungszustand zu versetzen, und anschließend der Benutzer die Trägervorrichtung in dem Entriegelungszustand aus dem Gehäuse hervorzieht. Die zweite externe Kraft ist bevorzugt mindestens zehnmal größer als die Gewichtskraft der Komponenten der Aufnahmevorrichtung, die aus deren Gehäuse im Entriegelungszustand ausfahrbar sind.

Bei der vorgestellten Aufnahmevorrichtung kann eine unsichere Verriegelung der Aufnahmevorrichtung, die beispielsweise durch einen unbeabsichtigten Kontakt einer Person mit der Frontblende herbeigeführt worden ist, sehr einfach dadurch optisch und haptisch erkannt werden, dass im Fall einer unsicheren Verriegelung die Frontblende von der Trägervorrichtung hervorsteht, und nur im Fall einer sicheren Verriegelung, also bei einer Fixierung der Trägervorrichtung in der eingefahrenen Endposition, die Frontblende an der Trägervorrichtung so nah wie möglich bzw. am dichtesten anliegt. Zudem unterbindet der Verriegelungs- und Führungsmechanismus ein unkontrolliertes Ausfahren der Trägervorrichtung.

Eine unsichere Verriegelung bzw. eine unbeabsichtigte Entriegelung wird auch dadurch unterbunden, dass die Trägervorrichtung der vorgestellten Aufnahmevorrichtung nur durch Aufbringen der zweiten externen Kraft, die der ersten externen Kraft zeitlich nachfolgt und eine zu der ersten externen Kraft unterschiedliche Richtung aufweist, auf die Frontblende in den Entriegelungszustand versetzbar ist.

Da die Frontblende in dem Fixierungszustand weder von der Trägervorrichtung absteht noch von dieser ausgelenkt bzw. ausgeschwenkt ist, sondern dicht an der Trägervorrichtung anliegt, wird das optische Erscheinungsbild einer mit der vorgestellten Aufnahmevorrichtung versehenen Lebensmittelzubereitungsmaschine nicht beeinträchtigt.

In einer Weiterbildung der vorgestellten Aufnahmevorrichtung ist vorgesehen, dass der Verriegelungs- und Führungsmechanismus ausgebildet ist, die Trägervorrichtung automatisch, beispielsweise mittels einer Federkraftvorrichtung des Verriegelungs- und Führungsmechanismus, in den Sicherungszustand zurückzuversetzen, wenn unmittelbar nach dem Erreichen des Entriegelungszustands von dem Benutzer keine dritte externe Kraft zum Ausziehen der Trägervorrichtung unmittelbar auf die Frontblende aufgebracht wird. Damit der Entriegelungszustand beibehalten wird, muss unmittelbar nach der Aufbringung der zweiten externen Kraft eine dritte externe Kraft von dem Benutzer auf die Frontblende aufgebracht werden. Die dritte externe Kraft ist in Richtung des Ausfahrens der Trägervorrichtung gerichtet. Ohne Aufbringung der externen Kraft wird die Trägervorrichtung durch die Kraft der Federkraftvorrichtung wieder in den Sicherungszustand zurückversetzt. Die vorgegebenen Richtungen der zweiten und dritten externen Kräfte unterscheiden sich, bevorzugt um mindestens 60 Grad.

In einer Weiterbildung der vorgestellten Aufnahmevorrichtung ist vorgesehen, dass der Verriegelungs- und Führungsmechanismus ausgebildet ist zum geführten translatorischen und/oder rotatorischen Bewegen der Trägervorrichtung aus dem Sicherungszustand in den Fixierungszustand in Reaktion auf eine von dem Benutzer unmittelbar auf die Frontblende, insbesondere in Richtung eines Einfahrens der Trägervorrichtung in das Gehäuse, aufgebrachte vierte externe Kraft, zusammen mit einer Bewegung der Frontblende relativ zu der Trägervorrichtung. Die vierte externe Kraft wird von einem Benutzer aufgebracht, der von der Vorderseite der Aufnahmevorrichtung gegen die Frontblende drückt, um eine Drehbewegung der Frontblende zu bewirken, die zu der durch die erste externe Kraft bewirkten Drehbewegung der Frontblende entgegengesetzt ist.

Eine Weiterbildung der vorgestellten Aufnahmevorrichtung ist für externe Belastungen der Trägervorrichtung in der ausgefahrenen Endposition von mindestens 1000 Newton auslegt. Dadurch wird ein sicherer Betrieb der Aufnahmevorrichtung in Luftfahrzeugen ermöglicht. Die Aufnahmevorrichtung wird nicht beschädigt, wenn sich Kabinenpersonal aufgrund von Turbulenzen auf der vollständig ausgefahrenen Trägervorrichtung abstützt oder auf diese mit einem Körperteil aufprallt.

Eine Weiterbildung der vorgestellten Aufnahmevorrichtung ist elektrik- und elektronikfrei ausgebildet. Dadurch werden eine hohe Ausfallsicherheit und eine lange wartungsfreie Nutzungsdauer der Aufnahmevorrichtung ermöglicht.

In einer Weiterbildung der vorgestellten Aufnahmevorrichtung ist vorgesehen, dass die Aufnahmevorrichtung eine Fluidzuführvorrichtung zum Bereitstellen eines Fluids, insbesondere Wasser oder Dampf, aufweist oder mit dieser koppelbar ist. Ferner ist vorgesehen, dass die Aufnahmevorrichtung angeordnet und ausgebildet ist zum Empfangen des von der Fluidzuführvorrichtung bereitgestellten Fluids, und zum Zuführen des Fluids zu der Trägervorrichtung, insbesondere zu einer in dieser aufgenommenen Lebensmittelkomponente, nur in dem Fixierungszustand.

Die Aufgabe der vorliegenden Erfindung wird auch durch eine Lebensmittelzubereitungsmaschine gelöst, die mit der vorgestellten Aufnahmevorrichtung oder einer ihrer Weiter- und Fortbildungen versehen ist. Die Lebensmittelzubereitungsmaschine ist insbesondere für eine Bordküche eines Luftfahrzeugs vorgesehen.

In einer Weiterbildung ist die vorgestellte Lebensmittelzubereitungsmaschine mit einem auf einer Vorderseite der Lebensmittelzubereitungsmaschine angeordneten Oberflächenabschnitt versehen, in den die Frontblende der Aufnahmevorrichtung integriert ist, wobei die Frontblende in dem Sicherungszustand von dem Oberflächenabschnitt hervorsteht und in dem Fixierungszustand nicht von dem Oberflächenabschnitt hervorsteht. Dadurch wird gewährleistet, dass eine unsichere Verriegelung einfach optisch und haptisch erkannt werden kann. Zudem beeinträchtigt die Frontblende in dem Fixierungszustand nicht das optische Erscheinungsbild der Lebensmittelzubereitungsmaschine.

Die Erfindung umfasst beliebige Kombinationen der oben vorgestellten Weiterbildungen.

### Kurze Beschreibung der Zeichnungen

Zur Verdeutlichung der vorgeschlagenen Aufnahmevorrichtung und der Lebensmittelzubereitungsmaschine werden nun Ausführungsbeispiele mit Verweis auf die folgenden Figuren vorgestellt.
- Fig. 1: ist eine schematische Seitenansicht eines Ausführungsbeispiels einer erfindungsgemäßen Aufnahmevorrichtung in dem Fixierungszustand.
- Fig. 2: ist eine schematische Seitenansicht eines Ausführungsbeispiels einer erfindungsgemäßen Aufnahmevorrichtung in dem Sicherungszustand.
- Fig. 3: ist eine schematische Seitenansicht eines Ausführungsbeispiels einer erfindungsgemäßen Aufnahmevorrichtung in dem Entriegelungszustand.
- Fig.4: veranschaulicht Bewegungen von Komponenten des in Fig. 1 bis Fig. 3 veranschaulichten Ausführungsbeispiels der erfindungsgemäßen Aufnahmevorrichtung beim Übergang in den Fixierungszustand.
- Fig. 5: ist eine perspektivische Ansicht eines Ausführungsbeispiels einer erfindungsgemäßen Lebensmittelzubereitungsmaschine mit einer erfindungsgemäßen Aufnahmevorrichtung in dem Fixierungszustand.
- Fig. 6: ist eine perspektivische Ansicht eines Ausführungsbeispiels einer erfindungsgemäßen Lebensmittelzubereitungsmaschine mit einer erfindungsgemäßen Aufnahmevorrichtung in dem Sicherungszustand.
- Fig. 7: ist eine perspektivische Ansicht eines Ausführungsbeispiels einer erfindungsgemäßen Lebensmittelzubereitungsmaschine mit einer erfindungsgemäßen Aufnahmevorrichtung in dem Entriegelungszustand mit einer nicht vollständig ausgefahrenen Trägervorrichtung.
- Fig. 8: ist eine perspektivische Ansicht eines Ausführungsbeispiels einer erfindungsgemäßen Lebensmittelzubereitungsmaschine mit einer erfindungsgemäßen Aufnahmevorrichtung in dem Entriegelungszustand mit einer vollständig ausgefahrenen Trägervorrichtung.

In den aufgeführten Figuren sind identische oder ähnliche Komponenten figuren-übergreifend mit denselben Bezugszeichen bezeichnet.

### Ausführungsbeispiele der Erfindung

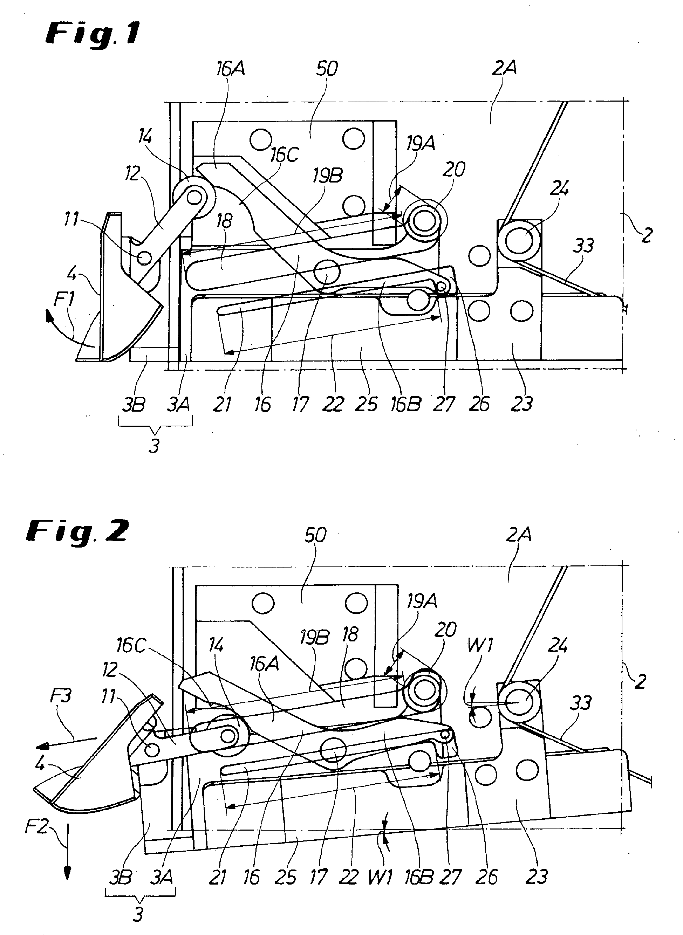

Die in Fig. 1, Fig. 2 und Fig. 3 schematisch veranschaulichte Aufnahmevorrichtung 1 weist ein Gehäuse 2, eine Trägervorrichtung 3, eine Frontblende 4 und einen Verriegelungs- und Führungsmechanismus mit den Komponenten 12 bis 33 auf. Zur besseren Verdeutlichung der Ausgestaltung und Anordnung der Trägervorrichtung 3 und des Verriegelungs- und Führungsmechanismus des veranschaulichten Ausführungsbeispiels, die zumindest teilweise in dem Gehäuse 2 angeordnet sind, ist ein Seitenwandabschnitt 2a des Gehäuses 2 in Fig. 1, Fig. 2 und Fig. 3 transparent dargestellt.

Die Trägervorrichtung 3 ist beispielhaft mehrteilig aus einem Trägervorrichtungsbasiskörper 3A und einem Trägervorrichtungsfrontkörper 3B aufgebaut, die starr miteinander verbunden sind. Der Trägervorrichtungsbasiskörper 3A weist mindestens eine (nicht gezeigte) Vertiefung zur Aufnahme mindestens einer Lebensmittelkomponente auf, die zur Aufnahme von Behältnissen, wie beispielsweise ein Container mit einer darin aufgenommenen Lebensmittelkomponente, ausgestaltet ist. Der Trägervorrichtungsfrontkörper 3B ist an dem der Vorderseite der Aufnahmevorrichtung 1 zugewandten Ende des Trägervorrichtungsbasiskörpers 3A angebracht. In Fig. 1, Fig. 2 und Fig. 3 ist die Vorderseite der Aufnahmevorrichtung 1 jeweils in dem linken Seitenabschnitt angeordnet. An dem Trägervorrichtungsfrontkörper 3B ist ein Drehlager 11 bereitgestellt.

Die Frontblende 4 ist durch das Drehlager 11 innerhalb eines vorgegebenen Winkelbereichs drehbar an dem Trägervorrichtungsbasiskörper 3A der Trägervorrichtung 3 befestigt.

In Fig. 1, Fig. 2 und Fig. 3 ist aus Gründen einer besseren Darstellbarkeit nur der auf der rechten Seite der Trägervorrichtung angeordnete Verriegelungs- und Führungsmechanismus dargestellt. Zur stabilen und sicheren Führung der Trägervorrichtung 3 ist der Verrieglungs- und Führungsmechanismus an der rechten und der (in den Figuren 1 bis 3 nicht gezeigten) linken Seite der Trägervorrichtung 3 bereitgestellt. Der Verrieglungs- und Führungsmechanismus enthält in dem gezeigten Ausführungsbeispiel für jede der rechten und der linken Seiten jeweils einen Hebelarm 12, eine Kontaktrolle 14, eine als Kipphebel ausgestaltete Kraftumlenkvorrichtung 16, eine erste Führungsvorrichtung 18 mit einer Führungsrolle 20, eine zweite Führungsvorrichtung 21, einen Drehträger 23, ein Drehlager 24, eine Federkraftvorrichtung 33, und eine ausziehbare Führungsschiene 25. Abweichend von der Veranschaulichung kann der Verriegelungs- und Führungsmechanismus aber auch einseitig, z.B. nur auf der rechten oder linken Seite, und/oder mittig bereitgestellt sein.

Ein Ende des Hebelarms 12 ist an der Frontblende 4 so befestigt, dass eine Drehbewegung der Frontblende 4 in eine Dreh- bzw. Schwenkbewegung des Hebelarms 12 umgesetzt wird. An dem von der Frontblende 4 abgewandten, anderen Ende des Hebelarms 12 ist eine drehbar gelagerte Kontaktrolle 14 befestigt. Die Kontaktrolle 14 ist so angeordnet und dimensioniert, dass sie zumindest im Fixierungszustand und im Entriegelungszustand permanent in mechanischem Kontakt mit der Kraftumlenkvorrichtung 16 ist.

Die Kraftumlenkvorrichtung 16 ist als ein Kipphebel ausgestaltet und ist durch ein Drehgelenk 17 drehbar an dem Trägervorrichtungsfrontkörper 3B befestigt. Ein der Frontblende 4 zugewandter Hebelarm 16A der Kraftumlenkvorrichtung 16 ist so ausgebildet und angeordnet, dass er in dem zuvor erwähnten mechanischen Kontakt mit der Kontaktrolle 14 ist. Der von der Frontblende 4 abgewandte Hebelarm 16B ist mit einem Führungsstift 27 versehen, dessen Position bzw. Bewegung durch die zweite Führungsvorrichtung 21 geführt wird.

Der Drehträger 23 des Verriegelungs- und Führungsmechanismus ist durch das Drehlager 24 drehbar an der Innenseite des Seitenwandabschnitts 2A des Gehäuses 2 befestigt. Der Drehträger 23 ist über die ausziehbare Führungsschiene 25 mechanisch mit dem Trägervorrichtungsbasiskörper 3A gekoppelt. Durch die wie oben beschriebene Anordnung und mechanische Kopplung des Drehträgers 23, des Drehlagers 24, der ausziehbaren Führungsschiene 25 und des Trägervorrichtungsbasiskörpers 3A ist die Trägervorrichtung 3 translatorisch und rotatorisch relativ zu dem Gehäuse 2 bewegbar und aus dem Gehäuse 2 ausfahrbar bzw. in dieses einfahrbar.

Zur Führung der translatorischen und rotatorischen Bewegung der Trägervorrichtung 3 relativ zu dem Gehäuse 2 ist der Verriegelungs- und Führungsmechanismus mit der ersten Führungsvorrichtung 18 und der Führungsrolle 20 versehen.

Die Führungsrolle 20 ist um eine Drehachse drehbar an dem Trägervorrichtungsbasiskörper 3A befestigt und ist entlang eines durch die erste Führungsvorrichtung 18 vorgegebenen ersten Führungswegs 19 bewegbar. Die erste Führungsvorrichtung 18 ist, wie in Fig. 1, Fig. 2 und Fig. 3 gezeigt, als eine Materialausnehmung bzw. als ein Durchgangsloch in Form eines breiten abgewinkelten Schlitzes in dem Seitenwandabschnitt 2a ausgestaltet. Der durch die erste Führungsvorrichtung 18 vorgegebene erste Führungsweg 19 ist aus einem dem Fixierungszustand und dem Sicherungszustand zugeordneten ersten Führungswegabschnitt 19A und einem dem Entriegelungszustand zugeordneten zweiten Führungswegabschnitt 19B zusammengesetzt. Der zweite Führungswegabschnitt 19B verläuft gerade und nicht gekrümmt. Die Führungswegabschnitte 19A und 19B spannen in ihrem Übergang einen stumpfen Winkel von bevorzugt mehr als 100 Grad auf. Die translatorische und/oder rotatorische Bewegung der Trägervorrichtung in dem Entriegelungszustand, also ein Ausfahren oder Einfahren der Trägervorrichtung aus bzw. in das Gehäuse, wird durch die entlang des zweiten Führungswegabschnitts 19B geführte Führungsrolle 20 vorgegeben. Wie in Fig. 1, Fig. 2 und Fig. 3 dargestellt, verläuft der zweite Führungswegabschnitt 19B nicht horizontal sondern mit einer konstanten negativen Steigung ab dem Übergang in den Entriegelungszustand bis zu der ausgefahrenen Endposition, Die ausgefahrene Endposition der Trägervorrichtung 3 ist durch ein der Vorderseite der Aufnahmevorrichtung zugewandtes Ende des zweiten Führungswegabschnitts 19B festgelegt.

Die zweite Führungsvorrichtung 21 des Verriegelungs- und Führungsmechanismus der Aufnahmevorrichtung 1 ist ausgebildet zum Führen des an dem Hebelarm 16B der Kraftumlenkvorrichtung 16 befestigten Führungsstifts 27, der einen Abschnitt der Kraftumlenkvorrichtung darstellt, entlang eines dem Entriegelungszustand zugeordneten vorgegebenen zweiten Führungswegs 22. Die zweite Führungsvorrichtung 21 ist, wie in Fig. 1, Fig. 2 und Fig. 3 gezeigt, als eine Materialausnehmung bzw. als ein schlitzartiges Durchgangsloch in dem Seitenwandabschnitt 2A ausgestaltet. Der zweite Führungsweg 22 der zweiten Führungsvorrichtung 21 ist so ausgestaltet, dass eine Drehung der Kraftumlenkvorrichtung 16 relativ zu der Trägervorrichtung 3 während des Entriegelungszustands blockiert wird. Dadurch wird über die Kontaktrolle 14 und den Hebelarm 12 in dem Entriegelungszustand die Frontblende 4 in ihrer von der Trägervorrichtung 3 hervorstehenden Lage fixiert. Wie in Fig. 1, Fig. 2 und Fig. 3 gezeigt, sind der zweite Führungswegabschnitt 19B der ersten Führungsvorrichtung 18 und der zweite Führungsweg 22 der zweiten Führungsvorrichtung 21, die beide dem Entriegelungszustand zugeordnet sind, als entsprechende schlitzartige Durchgangslöcher in dem Seitenwandabschnitt 2A parallel zueinander versetzt angeordnet.

An dem von der Frontblende 4 abgewandten Ende des zweiten Führungswegs 22 der zweiten Führungsvorrichtung 21 ist eine rechtwinklig zu dem zweiten Führungsweg 22 ausgerichtete, schlitzartige Aufweitung 26 in dem Seitenwandabschnitt 2A bereitgestellt. Die Aufweitung 26 ist ausgebildet zum Ermöglichen einer Drehbewegung der Kraftumlenkvorrichtung 16 um deren Drehachse 17.

In Fig. 1 ist der Fixierungszustand der Trägervorrichtung 3 und des Verriegelungs- und Führungsmechanismus der erfindungsgemäßen Aufnahmevorrichtung 1 veranschaulicht. Die Trägervorrichtung 3 befindet sich in der eingefahrenen Endposition in einer horizontalen Lage. Die Führungsrolle 20 wird an das Ende des ersten Führungswegabschnitts 19A des ersten Führungswegs 19 der ersten Führungsvorrichtung 18 gedrückt. Die Frontblende 4 liegt so nah wie möglich an dem Trägervorrichtungsfrontkörper 3B an. Die Kontaktrolle 14 ist in mechanischem Kontakt mit dem äußeren Endabschnitt des Hebelarms 16A der Kraftumlenkvorrichtung 16 und blockiert eine Bewegung der Kraftumlenkvorrichtung 16. Die Federkraftvorrichtung 33 stellt eine Kraft bereit, die bei nicht blockierter Kraftumlenkvorrichtung 16 zu einer Drehung der Kraftumlenkvorrichtung im Gegenuhrzeigersinn führen würde. Aufgrund der bereitgestellten Kraft wird der Hebelarm 16a stärker auf die Kontaktrolle 14 gedrückt, wodurch die Fixierung der Trägervorrichtung 3 in der eingefahrenen Endposition verstärkt wird. Dies ermöglicht, dass die Aufnahmevorrichtung auch dann sicher im Fixierungszustand verbleibt, wenn ein Fluid mit hohem Druck, beispielsweise von einer in Fig. 1, Fig. 2 und Fig. 3 schematisch veranschaulichten Fluidzuführvorrichtung 50, auf die Trägervorrichtung 3 bzw. auf eine in dieser aufgenommene Lebensmittelkomponente aufgebracht wird. Der Führungsstift 27 befindet sich in der Aufweitung 26, um eine Drehung der Kraftumlenkvorrichtung 16 und somit auch eine Bewegung der Frontblende 4 relativ zu der Trägervorrichtung 3 durch eine auf die Frontblende 4 aufgebrachte externe Kraft zuzulassen.

In Fig. 2 ist der Sicherungszustand der Trägervorrichtung und des Verriegelungs- und Führungsmechanismus der erfindungsgemäßen Aufnahmevorrichtung 1 veranschaulicht, der sich ergibt, wenn auf die Frontblende 4 der Aufnahmevorrichtung 1 in dem in Fig. 1 dargestellten Fixierungszustand eine erste externe Kraft F1 von einem Benutzer aufgebracht wird, die anfangs in Richtung eines Ausfahrens der Trägervorrichtung gerichtet ist und zu einer Drehung der Frontblende 4 in einen von der Trägervorrichtung 3 hervorstehenden Zustand führt, wie in Fig. 2 dargestellt, wobei der Richtungsverlauf der Kraft F1 der Drehung der Frontblende 4 entspricht. Zur Ermöglichung dieser Drehung der Frontblende 4 ist der Hebelarm 16A mit einem muldenartigen Oberflächenabschnitt 16C versehen, entlang dessen die Kontaktrolle 14 bei der Drehung der Frontblende 4 in die von der Trägervorrichtung 3 hervorstehende Lage geführt wird. Die Drehbewegung der Frontblende 4 im Uhrzeigersinn geht einher mit einer Drehbewegung der Kraftumlenkvorrichtung 16 um die Drehachse des Drehlagers 17 im Gegenuhrzeigersinn und einer Drehbewegung der Trägervorrichtung 3 im Gegenuhrzeigersinn, an der die Kraftumlenkvorrichtung 16 beweglich befestigt ist. Diese Drehbewegung der Trägervorrichtung 3 um ungefähr 5 Grad (siehe Winkel W1 in Fig. 2), durch die die Trägervorrichtung 3 im Vergleich zu der Horizontallage abgesenkt und schräggestellt wird, wird durch die in dem ersten Führungswegabschnitt 19A der ersten Führungsvorrichtung 18 geführte Führungsrolle 20 geführt. Das Ausmaß der Bewegung wird auch durch die von der Federkrafteinrichtung 33 bereitgestellte Federkraft bestimmt. Der Führungsstift 27 wird durch die Bewegung der Kraftumlenkvorrichtung 16 zu dem Anfang des zweiten Führungswegs 22 der zweiten Führungsvorrichtung 21 versetzt.

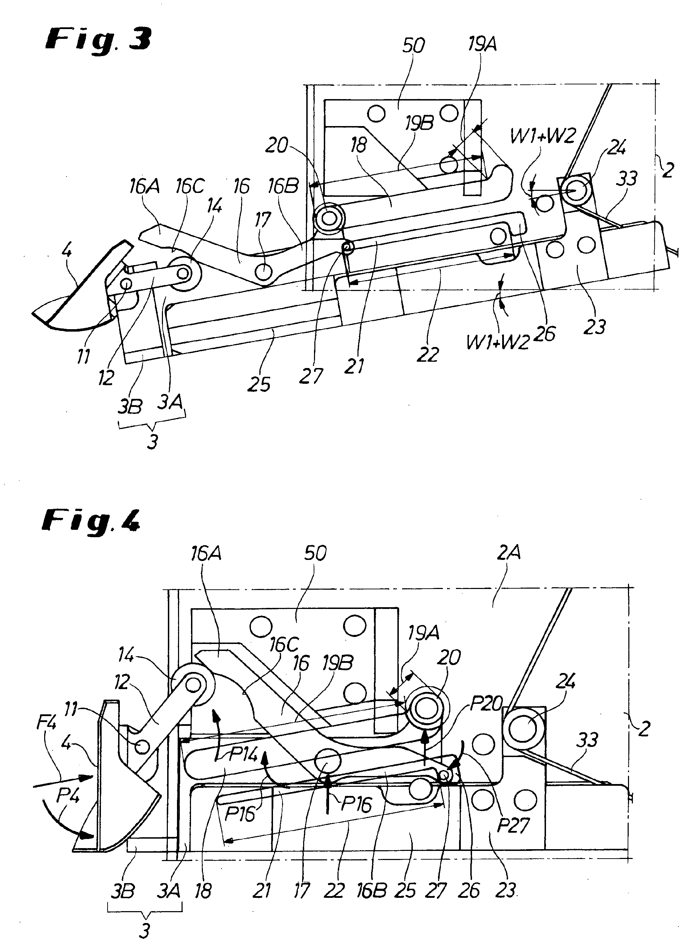

In Fig. 3 ist der Entriegelungszustand der Trägervorrichtung und des Verriegelungs- und Führungsmechanismus der erfindungsgemäßen Aufnahmevorrichtung 1 in der ausgefahrenen Endposition veranschaulicht, der sich ergibt, wenn auf die Frontblende 4 der Aufnahmevorrichtung 1 in dem in Fig. 2 dargestellten Sicherungszustand, im Anschluss an die erste externe Kraft F1, eine zweite externe Kraft F2 von dem Benutzer aufgebracht wird, die die Trägervorrichtung abwärts drückt. Die Kraft F2 ist somit abwärts und quer zu der Richtung eines Ausfahrens der Trägervorrichtung gerichtet. Die zweite externe Kraft F2 muss ausreichend groß sein, um eine von der Federkraftvorrichtung 33 in dem Sicherungszustand bereitgestellte Gegenkraft, die eine weitere Drehung der Trägervorrichtung jenseits der bereits erfolgten Drehung von ungefähr 5 Grad (= Winkel W1) behindert, zu überwinden und um die Führungsrolle 20 von dem ersten Führungswegabschnitt 19A in den zweiten Führungswegabschnitt 19B der ersten Führungsvorrichtung 18, die im Übergang miteinander einen stumpfen Winkel aufspannen, zu versetzen. Durch Aufbringen der zweiten externen Kraft F2 wird die Trägervorrichtung 3 im Vergleich zu dem Sicherungszustand zusätzlich zu der Drehung um ungefähr 5 Grad (Winkel W1) beim Übergang von dem Fixierungszustand in den Sicherungszustand um ungefähr weitere 5 Grad (= Winkel W2) in derselben Drehrichtung gedreht. Damit der Entriegelungszustand beibehalten wird, muss unmittelbar nach der Aufbringung der zweiten externen Kraft F2 eine dritte externe Kraft F3 von dem Benutzer auf die Frontblende 4 aufgebracht werden. Die dritte externe Kraft F3 ist in Richtung des Ausfahrens der Trägervorrichtung 3 gerichtet. Ohne Aufbringung der externen Kraft F3 wird die Trägervorrichtung 3 durch die Kraft der Federkraftvorrichtung 33 wieder in den Sicherungszustand zurückversetzt. In dem Entriegelungszustand wird die Trägervorrichtung 3 beim Ausfahren oder Einfahren entlang des zweiten Führungswegabschnitts 19B der ersten Führungsvorrichtung 18 durch die an der Trägervorrichtung 3 befestigte Führungsrolle 20 geführt. Im Vergleich zu der Horizontallage der Trägervorrichtung 3 im Fixierungszustand ist die Trägervorrichtung 3 im Entriegelungszustand um die Summe der Winkel W1 und W2, also um ungefähr 10 Grad schräggestellt bzw. abgesenkt.

Die in Fig. 1, Fig. 2 und Fig. 3 veranschaulichte Aufnahmevorrichtung 1 ist für eine Verwendung in einer Bordküche eines Luftfahrzeugs vorgesehen und ist für externe Belastungen der Trägervorrichtung in der ausgefahrenen Endposition von mindestens 1000 Newton ausgebildet. Zudem ist die Aufnahmevorrichtung 1 elektrik- und elektronikfrei ausgestaltet.

In Fig. 4 sind Bewegungen von Komponenten des in Fig. 1 bis Fig. 3 veranschaulichten Ausführungsbeispiels der erfindungsgemäßen Aufnahmevorrichtung beim Übergang von dem Sicherungszustand in den Fixierungszustand mittels Pfeilen veranschaulicht. In Fig. 4 bezeichnet ein Pfeil mit dem Bezugszeichen Px eine Bewegung der Komponente x beim Übergang von dem Sicherungszustand in den Fixierungszustand. Um den Verriegelungs- und Führungsmechanismus und die Trägervorrichtung von dem Entriegelungszustand über den Sicherungszustand in den Fixierungszustand zu versetzen, muss von einem Benutzer eine vierte externe Kraft F4, die in Richtung eines Einfahrens der Trägervorrichtung gerichtet ist, auf die Frontblende 4 aufgebracht werden. Die Komponenten der Aufnahmevorrichtung 1 sind hingegen aus Gründen einer vereinfachten Darstellung in dem in Fig. 1 dargestellten Zustand, also im bereits erreichten Fixierungszustand, dargestellt.

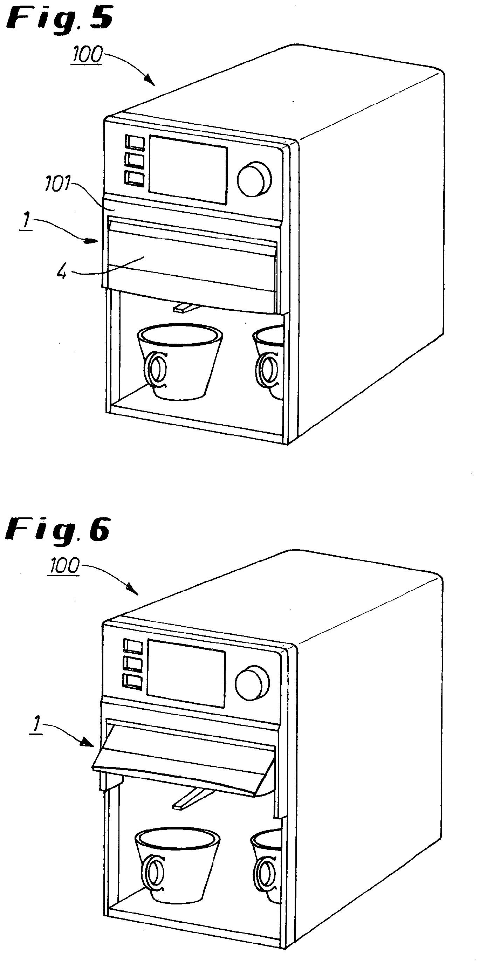

Fig. 5, Fig. 6, Fig. 7 und Fig. 8 zeigen ein Ausführungsbeispiel einer erfindungsgemäßen Lebensmittelzubereitungsmaschine mit dem zuvor vorgestellten Ausführungsbeispiel der erfindungsgemäßen Aufnahmevorrichtung in perspektivischer Darstellung in dem Fixierungszustand, dem Sicherungszustand, dem Entriegelungszustand mit nicht vollständig ausgefahrener Trägervorrichtung bzw. dem Entriegelungszustand mit vollständig ausgefahrener Trägervorrichtung. Die veranschaulichte Lebensmittelzubereitungsmaschine 100 ist als eine Kakaozubereitungsmaschine (und/oder beispielsweise als eine Kaffee/- und/oder Espresso-Maschine) ausgebildet, die mit der zuvor vorgestellten Aufnahmevorrichtung 1 versehen ist. Die Trägervorrichtung 3 der Aufnahmevorrichtung 1 weist zwei Vertiefungen 60 auf, die jeweils zur Aufnahme eines mit Kakaomilchpulver (alternativ: Kaffeebohnenmehl) gefüllten (nicht gezeigten) Containers ausgebildet sind. In der Lebensmittelzubereitungsmaschine 100 ist eine nicht gezeigte Fluidzuführvorrichtung angeordnet, die nur mit der Trägervorrichtung 3 bzw. der Aufnahmevorrichtung 1 zum Zuführen von Heißwasser unter hohem Druck gekoppelt ist, wenn die Trägervorrichtung 3 in dem in Fig. 5 veranschaulichten Fixierungszustand ist. Das zugeführte Heißwasser wird durch eine Membran oder Öffnung des Containers und anschließend in das Kakaomilchpulver (alternativ: Kaffeebohnenmehl) gepresst, das eine Lebensmittelkomponente ist (alternativ: enthält). Die dadurch erzeugte Kakaomilch (alternativ: Kaffeeflüssigkeit) wird anschließend aus dem Container in eine oder mehrere unterhalb der Trägervorrichtung 3 angeordnete Tassen überführt.

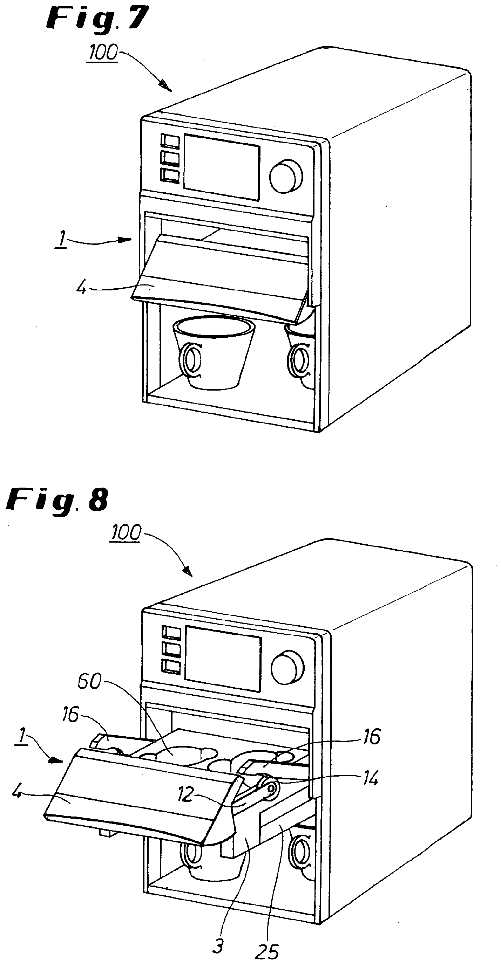

Auf der Vorderseite der Lebensmittelzubereitungsmaschine 100 ist ein Oberflächenabschnitt 101 angeordnet, in den die Frontblende 4 der Aufnahmevorrichtung 1 integriert ist. In dem in Fig. 5 veranschaulichten Fixierungszustand steht die Frontblende 4 nicht von dem Oberflächenabschnitt 101 hervor, sondern schließt bündig mit dem Oberflächenabschnitt 101 ab. In dem in Fig. 6 veranschaulichten Sicherungszustand steht die Frontblende 4 schräg von dem Oberflächenabschnitt 101 hervor und liegt nicht dicht an der Trägervorrichtung 3 an. Dies gilt auch für den in Fig. 7 und Fig. 8 gezeigten Fixierungszustand der Trägervorrichtung 3. In Fig. 8 ist zudem beispielhaft veranschaulicht, dass die oben erläuterten Komponenten des Verriegelungs- und Führungsmechanismus jeweils auf der rechten Seite und der linken Seite der Trägervorrichtung bereitgestellt sind.

### Bezugszeichenliste

- 1: Aufnahmevorrichtung
- 2: Gehäuse
- 2A: Seitenwandabschnitt
- 3: Trägervorrichtung
- 3A: Trägervorrichtungsbasiskörper
- 3B: Trägervorrichtungsfrontkörper
- 4: Frontblende
- 11: Drehlager
- 12: Hebelarm
- 14: Kontaktrolle
- 16: Kraftumlenkvorrichtung
- 16A, 16B: Hebelarm
- 16C: muldenartiger Oberflächenabschnitt
- 17: Drehgelenk
- 18: erste Führungsvorrichtung
- 19: erster Führungsweg
- 19A: erster Führungswegabschnitt
- 19B: zweiter Führungswegabschnitt
- 20: Führungsrolle
- 21: zweite Führungsvorrichtung
- 22: zweiter Führungsweg
- 23: Drehträger
- 24: Drehlager
- 25: Führungssschiene
- 26: Aufweitung
- 27: Führungsstift
- 33: Federkraftvorrichtung
- 50: Fluidzubereitungsvorrichtung
- 60: Vertiefung
- 100: Lebensmittelzubereitungsmaschine
- 101: Oberflächenabschnitt
- F1: erste externe Kraft
- F2: zweite externe Kraft
- F3: dritte externe Kraft
- F4: vierte externe Kraft
- Px: Bewegung der Komponente x
- W1: erster Winkel
- W2: zweiter Winkel

## Patentansprüche

1. Aufnahmevorrichtung (1), die ausgebildet ist zum Aufnehmen einer Lebensmittelkomponente und zur Aufnahme in einer Lebensmittelzubereitungsmaschine, insbesondere für eine Zubereitung eines Getränks und/oder einer Mahlzeit in einer Bordküche eines Luftfahrzeugs, wobei die Aufnahmevorrichtung (1) umfasst:
ein Gehäuse (2);
eine zur Aufnahme der Lebensmittelkomponente ausgebildete Trägervorrichtung (3, 3A, 3B), die in dem Gehäuse (2) beweglich gelagert, zu einer Vorderseite der Aufnahmevorrichtung aus dem Gehäuse (2) geführt von einer eingefahrenen Endposition bis zu einer ausgefahrenen Endposition ausfahrbar ist, **dadurch gekennzeichnet, dass** die Trägervorrichtung (3, 3A, 3B) durch einen Verriegelungs- und Führungsmechanismus (12-33) in einen Fixierungszustand, einen Sicherungszustand oder einen Entriegelungszustand versetzbar ist;
den Verriegelungs- und Führungsmechanismus (12-33), der ausgebildet ist, in dem Fixierungszustand die Trägervorrichtung (3, 3A, 3B) in der eingefahrenen Endposition relativ zu dem Gehäuse (2) zu fixieren, in dem Sicherungszustand ein unkontrolliertes Ausfahren der in einer Sicherungsposition angeordneten Trägervorrichtung (3, 3A, 3B) aus dem Gehäuse (2) zu blockieren, und in dem Entriegelungszustand ein Ausfahren der Trägervorrichtung (3, 3A, 3B) aus dem Gehäuseabschnitt (2) zuzulassen; und
eine Frontblende (4) zum Betätigen des Verriegelungs- und Führungsmechanismus (12-33), die an der Vorderseite der Aufnahmevorrichtung (1) beweglich gelagert (11) angeordnet ist, wobei der Verriegelungs- und Führungsmechanismus (12-33) ausgebildet ist, die Trägervorrichtung (3, 3A, 3B) durch eine von einem Benutzer der Aufnahmevorrichtung unmittelbar auf die Frontblende (4) aufgebrachte erste externe Kraft (F1) von dem Fixierungszustand in den Sicherungszustand und durch eine von dem Benutzer unmittelbar auf die Frontblende (4) nachfolgend aufgebrachte, zweite externe Kraft (F2) von dem Sicherungszustand in den Entriegelungszustand zu versetzen, und die Frontblende (4) in dem Fixierungszustand weniger von der Trägervorrichtung (3, 3A, 3B) hervorsteht als in dem Sicherungszustand und dem Entriegelungszustand,
wobei der Verriegelungs- und Führungsmechanismus (12-33) einen Hebelarm (12), eine Kontaktrolle (14), eine als Kipphebel ausgestaltete Kraftumlenkvorrichtung (16), eine erste Führungsvorrichtung (18) mit einer Führungsrolle (20), eine zweite Führungsvorrichtung (21), einen Drehträger (23), ein Drehlager (24), eine Federkraftvorrichtung (33), und eine ausziehbare Führungsschiene (25) umfasst,
wobei ein Ende des Hebelarms (12) an der Frontblende so befestigt ist, dass eine Drehbewegung der Frontblende (4) in eine Dreh- bzw. Schwenkbewegung des Hebelarms (12) umgesetzt wird und an dem von der Frontblende (4) abgewandten, anderen Ende des Hebelarms (12) eine drehbar gelagerte Kontaktrolle (14) befestigt ist,
wobei die Kontaktrolle (14) so angeordnet und dimensioniert ist, dass sie zumindest im Fixierungszustand und im Entriegelungszustand permanent in mechanischem Kontakt mit der Kraftumlenkvorrichtung (16) ist,
wobei die Kraftumlenkvorrichtung (16) als ein Kipphebel ausgestaltet und durch ein Drehgelenk (17) drehbar an einem Trägervorrichtungsfrontkörper (3B) befestigt ist,
wobei ein der Frontblende (4) zugewandter Hebelarm (16A) der Kraftumlenkvorrichtung (16) so ausgebildet und angeordnet ist, dass er in dem zuvor erwähnten mechanischen Kontakt mit der Kontaktrolle (14) ist,
wobei der von der Frontblende (4) abgewandte Hebelarm (16B) mit einem Führungsstift (27) versehen ist, dessen Position bzw. Bewegung durch eine zweite Führungsvorrichtung (21) geführt wird,
wobei der Drehträger (23) durch das Drehlager (24) drehbar an einer Innenseite eines Seitenwandabschnitts (2A) des Gehäuses (2) befestigt ist,
wobei der Drehträger (23) über die ausziehbare Führungsschiene (25) mechanisch mit einem Trägervorrichtungsbasiskörper (3A) gekoppelt ist,
wobei durch diese Anordnung und mechanische Kopplung des Drehträgers (23), des Drehlagers (24), der ausziehbaren Führungsschiene (25) und des Trägervorrichtungsbasiskörpers (3A) die Trägervorrichtung (3) translatorisch und rotatorisch relativ zu dem Gehäuse (2) bewegbar und aus dem Gehäuse (2) ausfahrbar bzw. in dieses einfahrbar ist,
wobei zur Führung der translatorischen und rotatorischen Bewegung der Trägervorrichtung (3) relativ zu dem Gehäuse (2) der Verriegelungs- und Führungsmechanismus mit der ersten Führungsvorrichtung (18) und der Führungsrolle (20) versehen ist,
wobei die Führungsrolle (20) um eine Drehachse drehbar an dem Trägervorrichtungsbasiskörper (3A) befestigt und entlang eines durch die erste Führungsvorrichtung (18) vorgegebenen ersten Führungswegs (19) bewegbar ist,
wobei die erste Führungsvorrichtung (18) als eine Materialausnehmung bzw. als ein Durchgangsloch in Form eines breiten abgewinkelten Schlitzes in dem Seitenwandabschnitt (2a) ausgestaltet ist,
wobei der durch die erste Führungsvorrichtung (18) vorgegebene erste Führungsweg (19) aus einem dem Fixierungszustand und dem Sicherungszustand zugeordneten ersten Führungswegabschnitt (19A) und einem dem Entriegelungszustand zugeordneten zweiten Führungswegabschnitt (19B) zusammengesetzt ist,
wobei der zweite Führungswegabschnitt (19B) gerade und nicht gekrümmt verläuft, wobei die Führungswegeabschnitte (19A, 19B) in ihrem Übergang einen stumpfen Winkel von bevorzugt mehr als 100 Grad aufspannen,
wobei die translatorische und/oder rotatorische Bewegung der Trägervorrichtung (3) in dem Entriegelungszustand, also ein Ausfahren oder Einfahren der Trägervorrichtung (3) aus bzw. in das Gehäuse (2), durch die entlang des zweiten Führungswegabschnitts (19B) geführte Führungsrolle (20) vorgegeben wird,
wobei der zweite Führungswegabschnitt (19B) nicht horizontal, sondern mit einer konstanten negativen Steigung ab dem Übergang in den Entriegelungszustand bis zu der ausgefahrenen Endposition verläuft,
wobei die ausgefahrene Endposition der Trägervorrichtung (3) durch ein der Vorderseite der Aufnahmevorrichtung zugewandtes Ende des zweiten Führungswegabschnitts (19B) festgelegt ist,
wobei die zweite Führungsvorrichtung (21) des Verriegelungs- und Führungsmechanismus der Aufnahmevorrichtung (1) zum Führen des an dem Hebelarm (16B) der Kraftumlenkvorrichtung (16) befestigten Führungsstifts (27) ausgebildet ist, der einen Abschnitt der Kraftumlenkvorrichtung (16) darstellt, entlang eines dem Entriegelungszustand zugeordneten vorgegebenen zweiten Führungswegs (22),
wobei die zweite Führungsvorrichtung (21) als eine Materialausnehmung bzw. als ein schlitzartiges Durchgangsloch in dem Seitenwandabschnitt (2A) ausgestaltet ist,
wobei der zweite Führungsweg (22) der zweiten Führungsvorrichtung (21) so ausgestaltet ist, dass eine Drehung der Kraftumlenkvorrichtung (16) relativ zu der Trägervorrichtung (3) während des Entriegelungszustands blockiert wird,
wobei dadurch über die Kontaktrolle (14) und den Hebelarm (12) in dem Entriegelungszustand die Frontblende (4) in ihrer von der Trägervorrichtung (3) hervorstehenden Lage fixiert wird,
wobei der zweite Führungswegabschnitt (19B) der ersten Führungsvorrichtung (18) und der zweite Führungsweg (22) der zweiten Führungsvorrichtung (21), die beide dem Entriegelungszustand zugeordnet sind, als entsprechende schlitzartige Durchgangslöcher in dem Seitenwandabschnitt (2A) parallel zueinander versetzt angeordnet sind,
wobei an dem von der Frontblende (4) abgewandten Ende des zweiten Führungswegs (22) der zweiten Führungsvorrichtung (21) eine rechtwinklig zu dem zweiten Führungsweg (22) ausgerichtete, schlitzartige Aufweitung (26) in dem Seitenwandabschnitt (2A) bereitgestellt ist, wobei die Aufweitung (26) zum Ermöglichen einer Drehbewegung der Kraftumlenkvorrichtung (16) um deren Drehachse (17) ausgebildet ist,
wobei, im Fixierungszustand, die Trägervorrichtung (3) sich in der eingefahrenen Endposition
in einer horizontalen Lage befindet,
wobei die Führungsrolle (20) an das Ende des ersten Führungswegabschnitts (19A) des ersten Führungswegs (19) der ersten Führungsvorrichtung (18) gedrückt wird,
wobei die Frontblende (4) so nah wie möglich an dem Trägervorrichtungsfrontkörper (3B) anliegt,
wobei die Kontaktrolle (14) in mechanischem Kontakt mit dem äußeren Endabschnitt des Hebelarms (16A) der Kraftumlenkvorrichtung (16) ist und eine Bewegung der Kraftumlenkvorrichtung (16) blockiert,
wobei die Federkraftvorrichtung (33) eine Kraft bereitstellt, die bei nicht blockierter Kraftumlenkvorrichtung (16) zu einer Drehung der Kraftumlenkvorrichtung im Gegenuhrzeigersinn führen würde,
wobei aufgrund der bereitgestellten Kraft der Hebelarm (16a) stärker auf die Kontaktrolle (14) gedrückt wird, wodurch die Fixierung der Trägervorrichtung (3) in der eingefahrenen Endposition verstärkt wird,
wobei dies ermöglicht, dass die Aufnahmevorrichtung auch dann sicher im Fixierungszustand verbleibt, wenn ein Fluid mit hohem Druck, beispielsweise von einer Fluidzuführvorrichtung (50), auf die Trägervorrichtung (3) bzw. auf eine in dieser aufgenommene Lebensmittelkomponente aufgebracht wird,
wobei der Führungsstift (27) sich in der Aufweitung (26) befindet, um eine Drehung der Kraftumlenkvorrichtung (16) und somit auch eine Bewegung der Frontblende (4) relativ zu der Trägervorrichtung (3) durch eine auf die Frontblende (4) aufgebrachte externe Kraft zuzulassen,
wobei sich der Sicherungszustand der Trägervorrichtung (3) und des Verriegelungs- und Führungsmechanismus ergibt, wenn auf die Frontblende (4) der Aufnahmevorrichtung (1) in dem Fixierungszustand die erste externe Kraft (F1) von dem Benutzer aufgebracht wird, die anfangs in Richtung eines Ausfahrens der Trägervorrichtung gerichtet ist und zu einer Drehung der Frontblende (4) in einen von der Trägervorrichtung (3) hervorstehenden Zustand führt, wobei der Richtungsverlauf der Kraft (F1) der Drehung der Frontblende (4) entspricht, wobei zur Ermöglichung dieser Drehung der Frontblende (4) der Hebelarm (16A) mit einem muldenartigen Oberflächenabschnitt (16C) versehen ist, entlang dessen die Kontaktrolle (14) bei der Drehung der Frontblende (4) in die von der Trägervorrichtung (3) hervorstehende Lage geführt wird,
wobei die Drehbewegung der Frontblende (4) im Uhrzeigersinn einhergeht mit einer Drehbewegung der Kraftumlenkvorrichtung (16) um die Drehachse des Drehlagers (17) im Gegenuhrzeigersinn und einer Drehbewegung der Trägervorrichtung (3) im Gegenuhrzeigersinn, an der die Kraftumlenkvorrichtung (16) beweglich befestigt ist,
wobei diese Drehbewegung der Trägervorrichtung (3) um ungefähr 5 Grad, durch die die Trägervorrichtung (3) im Vergleich zu der Horizontallage abgesenkt und schräggestellt wird, durch die in dem ersten Führungswegabschnitt (19A) der ersten Führungsvorrichtung (18) geführte Führungsrolle (20) geführt wird,
wobei das Ausmaß der Bewegung auch durch die von der Federkrafteinrichtung (33) bereitgestellte Federkraft bestimmt wird,
wobei der Führungsstift (27) durch die Bewegung der Kraftumlenkvorrichtung (16) zu dem Anfang des zweiten Führungswegs (22) der zweiten Führungsvorrichtung (21) versetzt wird,
wobei sich der Entriegelungszustand der Trägervorrichtung (3) und des Verriegelungs- und Führungsmechanismus ergibt, wenn auf die Frontblende (4) der Aufnahmevorrichtung (1) in dem Sicherungszustand, im Anschluss an die erste externe Kraft (F1), die zweite externe Kraft (F2) von dem Benutzer aufgebracht wird, die die Trägervorrichtung abwärts drückt,
wobei die zweite externe Kraft (F2) somit abwärts und quer zu der Richtung eines Ausfahrens der Trägervorrichtung (3) gerichtet ist,
wobei die zweite externe Kraft (F2) ausreichend groß sein muss, um eine von der Federkraftvorrichtung (33) in dem Sicherungszustand bereitgestellte Gegenkraft, die eine weitere Drehung der Trägervorrichtung (3) jenseits der bereits erfolgten Drehung von einem ersten Winkel (w1) von ungefähr 5 Grad behindert, zu überwinden und um die Führungsrolle (20) von dem ersten Führungswegabschnitt (19A) in den zweiten Führungswegabschnitt (19B) der ersten Führungsvorrichtung (18), die im Übergang miteinander einen stumpfen Winkel aufspannen, zu versetzen,
wobei durch Aufbringen der zweiten externen Kraft (F2) die Trägervorrichtung (3) im Vergleich zu dem Sicherungszustand zusätzlich zu der Drehung um den ersten Winkel (w1) von ungefähr 5 Grad beim Übergang von dem Fixierungszustand in den Sicherungszustand um einen weiteren zweiten Winkel (W2) von ungefähr 5 Grad in derselben Drehrichtung gedreht wird,
wobei in dem Entriegelungszustand die Trägervorrichtung (3) beim Ausfahren oder Einfahren entlang des zweiten Führungswegabschnitts (19B) der ersten Führungsvorrichtung (18) durch die an der Trägervorrichtung (3) befestigte Führungsrolle (20) geführt wird,
wobei im Vergleich zu der Horizontallage der Trägervorrichtung (3) im Fixierungszustand die Trägervorrichtung (3) im Entriegelungszustand um die Summe des ersten und zweiten Winkels (W1, W2), also um ungefähr 10 Grad schräggestellt bzw. abgesenkt ist.

2. Aufnahmevorrichtung (1) gemäß Anspruch 1, wobei der Verriegelungs- und Führungsmechanismus (12-33) ausgebildet ist, die Trägervorrichtung (3, 3A, 3B) automatisch in den Sicherungszustand zurückzuversetzen, wenn unmittelbar nach dem Erreichen des Entriegelungszustands von dem Benutzer keine dritte externe Kraft (F3) zum Ausziehen der Trägervorrichtung (3) unmittelbar auf die Frontblende (4) aufgebracht wird,
wobei, damit der Entriegelungszustand beibehalten wird, unmittelbar nach der Aufbringung der zweiten externen Kraft (F2) eine dritte externe Kraft (F3) von dem Benutzer auf die Frontblende (4) aufgebracht werden muss,
wobei die dritte externe Kraft (F3) in Richtung des Ausfahrens der Trägervorrichtung (3) gerichtet ist,
wobei ohne Aufbringung der externen Kraft (F3) die Trägervorrichtung (3) durch die Kraft der Federkraftvorrichtung (33) wieder in den Sicherungszustand zurückversetzt wird.

3. Aufhahmevorrichtung (1) gemäß einem der Ansprüche 1 bis 2, wobei der Verriegelungs- und Führungsmechanismus (12-33) ausgebildet ist zum geführten translatorischen und/oder rotatorischen Bewegen der Trägervorrichtung (3, 3A, 3B) aus dem Sicherungszustand in den Fixierungszustand in Reaktion auf eine von dem Benutzer unmittelbar auf die Frontblende, insbesondere in Richtung eines Einfahrens der Trägervorrichtung in das Gehäuse, aufgebrachte vierte externe Kraft (F4), zusammen mit einer Bewegung der Frontblende (4) relativ zu der Trägervorrichtung (3, 3A, 3B).

4. Aufnahmevorrichtung (1) gemäß einem der Ansprüche 1 bis 3, die auslegt ist für externe Belastungen der Trägervorrichtung (3, 3A, 3B) in der ausgefahrenen Endposition von mindestens 1000 Newton.

5. Aufnahmevorrichtung (1) gemäß einem der Ansprüche 1 bis 4, wobei die Aufnahmevorrichtung elektrik- und elektronikfrei ausgebildet ist.

6. Aufnahmevorrichtung (1) gemäß einem der Ansprüche 1 bis 5, wobei die Aufnahmevorrichtung eine Fluidzuführvorrichtung (50) zum Bereitstellen eines Fluids, insbesondere Wasser oder Dampf, aufweist oder mit dieser koppelbar ist, und die Aufnahmevorrichtung angeordnet und ausgebildet ist zum Empfangen des von der Fluidzufuhrvorrichtung (50) bereitgestellten Fluids, und zum Zuführen des Fluids zu der Trägervorrichtung (3, 3A, 3B), insbesondere zu mindestens einer in dieser aufgenommenen Lebensmittelkomponente, nur in dem Fixierungszustand.

7. Lebensmittelzubereitungsmaschine (100) mit einer Aufnahmevorrichtung (1) gemäß einem der Ansprüche 1 bis 6, wobei die Lebensmittelzubereitungsmaschine insbesondere für eine Luftfahrzeug-Bordküche vorgesehen ist.

8. Lebensmittelzubereitungsmaschine (100) gemäß Anspruch 7, mit einem auf einer Vorderseite der Lebensmittelzubereitungsmaschine angeordneten Oberflächenabschnitt (101), in den die Frontblende (4) der Aufnahmevorrichtung (1) integriert ist, wobei die Frontblende (4) in dem Sicherungszustand von dem Oberflächenabschnitt (101) hervorsteht und in dem Fixierungszustand nicht von dem Oberflächenabschnitt (101) hervorsteht.

## Claims

1. A receiving device (1), which is formed for receiving a food component and for being received in a food preparation machine, in particular for a preparation of a beverage and/or of a meal in a galley of an aircraft, wherein the receiving device (1) comprises:
a housing (2);
a support device (3, 3A, 3B), which is formed for receiving the food component and which is movably mounted in the housing (2) and, guided out of the housing (2) to a front side of the receiving device, can be extended from a retracted end position into an extended end position, **characterized in that** the support device (3, 3A, 3B) can be displaced into a fixing state, a securing state, or an unlocking state by means of a locking and guiding mechanism (12-33);
the locking and guiding mechanism (12-33), which is formed for fixing, in the fixing state, the support device (3, 3A, 3B) in the retracted end position relative to the housing (2), for blocking, in the securing state, an uncontrolled extension of the support device (3, 3A, 3B), which is arranged in a securing position, out of the housing (2), and for allowing, in the unlocking state, an extension of the support device (3, 3A, 3B) out of the housing section (2); and
a front panel (4), which is arranged in a movably mounted manner (11) on the front side of the receiving device (1), for actuating the locking and guiding mechanism (12-33), wherein the locking and guiding mechanism (12-33) is formed for displacing the support device (3, 3A, 3B) from the fixing state into the securing state by means of a first external force (F1) applied by a user of the receiving device directly to the front panel (4), and from the securing state into the unlocking state by means of a second external force (F2) subsequently applied by the user directly to the front panel (4), and the front panel (4) in the fixing state protrudes less from the support device (3, 3A, 3B) than in the securing state and the unlocking state,
wherein the locking and guiding mechanism (12-33) comprises a lever arm (12), a contact roller (14), a force deflecting device (16) designed as rocker arm, a first guide device (18) comprising a guide roller (20), a second guide device (21), a rotary support (23), a rotary bearing (24), a spring force device (33), and an extendable guide rail (25),
wherein one end of the lever arm (12) is fastened to the front panel so that a rotational movement of the front panel (4) is converted into a rotational or pivoting movement, respectively, of the lever arm (12), and a rotatably mounted contact roller (14) is fastened at the other end of the lever arm (12) facing away from the front panel (4),
wherein the contract roller (14) is arranged and dimensioned so that at least in the fixing state and in the unlocking state, it is permanently in mechanical contact with the force deflecting device (16),
wherein the force defecting device (16) is designed as a rocker arm and is rotatably fastened to a support device front body (3B) by means of a rotary joint (17),
wherein a lever arm (16A), which faces the front panel (4), of the force deflecting device (16) is formed and arranged so that it is in the above-mentioned mechanical contact with the contact roller (14),
wherein the lever arm (16B) facing away from front panel (4) is provided with a guide pin (27), the position or movement of which, respectively, is guided by means of a second guide device (21),
wherein the rotary support (23) is rotatably fastened to an inner side of a side wall section (2A) of the housing (2) by means of the rotary bearing (24),
wherein the rotary support (23) is mechanically coupled to a support device base body (3A) via the extendable guide rail (25),
wherein, by means of this arrangement and mechanical coupling of the rotary support (23), of the rotary bearing (24), of the extendable guide rail (25), and of the support device base body (3A), the support device (3) can be moved translationally and rotationally relative to the housing (2) and can be extended out of the housing (2) or can be retracted into the latter, respectively,
wherein the locking and guiding mechanism is provided with the first guide device (18) and the guide roller (20) for guiding the translational and rotational movement of the support device (3) relative to the housing (2),
wherein the guide roller (20) is fastened to the support device base body (3A) so as to be capable of rotating about an axis of rotation, and can be moved along a first guide path (19) predetermined by the first guide device (18),
wherein the first guide device (18) is designed as a material recess or as a through hole in the form of a wide angled slot in the side wall section (2a),
wherein the first guide path (19), which is predetermined by the first guide device (18), consists of a first guide path section (19A) assigned to the fixing state and the securing state, and a second guide path section (19B) assigned to the unlocking state,
wherein the second guide path section (19B) runs in a straight and not in a curved manner, wherein the guide path sections (19A, 19B) span an obtuse angle of preferably more than 100 degrees at their transition,
wherein the translational and/or rotational movement of the support device (3) in the unlocking state, thus an extension or retraction of the support device (3) from or into the housing (2), respectively, is predetermined by means of the guide roller (20), which is guided along the second guide path section (19B),
wherein the second guide path section (19B) does not run horizontally, but with a constant negative gradient from the transition into the unlocking state into the extended end position,
wherein the extended end position of the support device (3) is specified by an end of the second guide path section (19B) facing the front side of the receiving device,
wherein the second guide device (21) of the locking and guiding mechanism of the receiving device (1) is formed for guiding the guide pin (27), which is fastened to the lever arm (16B) of the force deflecting device (16) and which represents a section of the force deflecting device (16), along a predetermined second guide path (22) assigned to the unlocking state,
wherein the second guide device (21) is designed as a material recess or as a slot-like through hole in the side wall section (2A),
wherein the second guide path (22) of the second guide device (21) is designed so that a rotation of the force deflecting device (16) relative to the support device (3) during the unlocking state is blocked,
wherein, as a result, the front panel (4) is fixed in its position protruding from the support device (3) via the contact roller (14) and the lever arm (12) in the unlocking state,
wherein the second guide path section (19B) of the first guide device (18) and the second guide path (22) of the second guide device (21), both of which are assigned to the unlocking state, are arranged offset parallel to one another as corresponding slot-like through holes in the side wall section (2A),
wherein a slot-like widening (26), which is aligned at right angles to the second guide path (22), is provided in the side wall section (2A) at the end, which faces away from the front panel (4), of the second guide path (22) of the second guide device (21),
wherein the widening (26) is formed for providing a rotational movement of the force deflecting device (16) about the axis of rotation (17) thereof,
wherein, in the fixing state, the support device (3) is in the retracted end position
in a horizontal position,
wherein the guide roller (20) is pressed against the end of the first guide path section (19A) of the first guide path (19) of the first guide device (18),
wherein the front panel (4) bears against the support device front body (3B) as closely as possible,
wherein the contact roller (14) is in mechanical contact with the outer end section of the lever arm (16A) of the force deflecting device (16) and blocks a movement of the force deflecting device (16),
wherein the spring force device (33) provides a force, which, when the force deflecting device (16) is not blocked, would lead to a counterclockwise rotation of the force deflecting device,
wherein, due to the provided force, the lever arm (16a) is pressed more strongly against the contact roller (14), whereby the fixation of the support device (3) in the retracted end position is reinforced,
wherein this makes it possible that the receiving device also remains securely in the fixing state when a fluid is applied at high pressure, for example by a fluid feed device (50), to the support device (3) or to a food component received therein, respectively,
wherein the guide pin (27) is located in the widening (26) in order to allow a rotation of the force deflecting device (16) and thus also a movement of the front panel (4) relative to the support device (3) by means of an external force applied to the front panel (4),
wherein the securing state of the support device (3) and of the locking and guiding mechanism arises when the first external force (F1), which is initially directed in the direction of an extension of the support device and which leads to a rotation of the front panel (4) into a state protruding from the support device (3), is applied by the user to the front panel (4) of the receiving device (1) in the fixing state,
wherein the direction of the force (F1) corresponds to the rotation of the front panel (4),
wherein, in order to enable this rotation of the front panel (4), the lever arm (16A) is provided with a trough-like surface section (16C), along which the contract roller (14) is guided during the rotation of the front panel (4) into the position protruding from the support device (3),
wherein the clockwise rotational movement of the front panel (4) is associated with a counterclockwise rotational movement of the force deflecting device (16) about the axis of rotation of the rotary bearing (17) and a counterclockwise rotational movement of the support device (3), to which the force deflecting device (16) is movably fastened,
wherein this rotational movement of the support device (3) by approximately 5 degrees, by which the support device (3) is lowered and inclined compared to the horizontal position, is guided by means of the guide roller (20), which is guided in the first guide movement section (19A) of the first guide device (18),
wherein the extent of the movement is also determined by the spring force provided by the spring force mechanism (33),
wherein the guide pin (27) is displaced by means of the movement of the force deflecting device (16) to the start of the second guide path (22) of the second guide device (21),
wherein the unlocking state of the support device (3) and of the locking and guiding mechanism arises when, subsequently to the first external force (F1), the second external force (F2), which presses the support device downwards, is applied by the user to the front panel (4) of the receiving device (1) in the securing state,
wherein the second external force (F2) is thus directed downwards and transversely to the direction of an extension of the support device (3),
wherein the second external force (F2) has to be sufficiently large to overcome a counterforce, which is provided by the spring force device (33) in the securing state and which prevents a further rotation of the support device (3) by a first angle (W1) of approximately 5 degrees beyond the already occurred rotation, and to displace the guide roller (20) from the first guide path section (19A) into the second guide path section (19B) of the first guide device (18), which span an obtuse angle with one another in the transition,
wherein, by applying the second external force (F2), the support device (3), in comparison with the securing state, is rotated by a further second angle (W2) of approximately 5 degrees in the same direction of rotation in addition to the rotation by the first angle (W1) of approximately 5 degrees during the transition from the fixing state into the securing state,
wherein, in the unlocking state during the extension or retraction, the support device (3) is guided along the second guide path section (19B) of the first guide device (18) by means of the guide roller (20) fastened to the support device (3),
wherein, compared to the horizontal position of the support device (3) in the fixing state, the support device (3) in the unlocking state is inclined or lowered, respectively, by the sum of the first and second angle (W1, W2), thus by approximately 10 degrees.

2. The receiving device (1) according to claim 1, wherein the locking and guiding mechanism (12-33) is formed for automatically restoring the support device (3, 3A, 3B) into the securing state when, immediately after reaching the unlocking state, the user does not apply a third external force (F3) directly to the front panel (4) for retracting the support device (3),
wherein, so that the unlocking state is maintained, a third external force (F3) has to be applied by the user to the front panel (4) immediately after applying the second external force (F2),
wherein the third external force (F3) is directed in the direction of the extension of the support device (3),
wherein, without applying the external force (F3), the support device (3) is restored into the securing state again by means of the force of the spring force device (33) .

3. The receiving device (1) according to one of claims 1 to 2, wherein the locking and guiding mechanism (12-33) is formed for the guided translational and/or rotational moving of the support device (3, 3A, 3B) from the securing state into the fixing state in reaction to a fourth external force (F4) applied by a user directly to the front panel, in particular in the direction of a retraction of the support device into the housing, together with a movement of the front panel (4) relative to the support device (3, 3A, 3B).

4. The receiving device (1) according to one of claims 1 to 3, which is designed for external loads of at least 1000 Newtons on the support device (3, 3A, 3B) in the extended end position.

5. The receiving device (1) according to one of claims 1 to 4, wherein the receiving device is designed to be free from electrics and electronics.

6. The receiving device (1) according to one of claims 1 to 5, wherein the receiving device has a fluid feed device (50) for providing a fluid, in particular water or steam, or can be coupled thereto, and the receiving device is arranged and formed for receiving the fluid provided by the fluid feed device (50), and for feeding the fluid to the support device (3, 3A, 3B), in particular to at least one food component received therein, only in the fixing state.

7. A food preparation machine (100) comprising a receiving device (1) according to one of claims 1 to 6, wherein the food preparation machine is provided in particular for an aircraft galley.

8. The food preparation machine (100) according to claim 7, comprising a surface section (101), which is arranged on the front side of the food preparation machine and which is integrated in the front panel (4) of the receiving device (1), wherein the front panel (4) in the securing state protrudes from the surface section (101) and in the fixing state does not protrude from the surface section (101).

## Revendications

1. Dispositif de réception (1), qui est conçu pour recevoir un composant alimentaire et pour être reçu dans un appareil de préparation de produits alimentaires, notamment pour la préparation d'une boisson et/ou d'un repas dans un office d'un aéronef, le dispositif de réception (1) comprenant :
un boîtier (2) ;
un dispositif de support (3, 3A, 3B), conçu pour recevoir le composant alimentaire, qui en étant logé de manière mobile dans le boîtier (2), est susceptible d'être sorti d'une position extrême rentrée jusqu'à une position extrême sortie, en étant guidé hors du boîtier (2) vers une face avant du dispositif de réception, **caractérisé en ce que** le dispositif de support (3, 3A, 3B) est susceptible d'être amené par un mécanisme de verrouillage et de guidage (12-33) dans un état de fixation, un état de sécurité ou un état déverrouillé ;
le mécanisme de verrouillage et de guidage (12-33), qui est conçu pour fixer, dans l'état de fixation le dispositif de support (3, 3A, 3B) dans la position extrême rentrée par rapport au boîtier (2), pour bloquer, dans l'état de sécurité une sortie incontrôlée du dispositif de support (3, 3A, 3B) placé dans une position de blocage hors du boîtier (2), et dans l'état déverrouillé, pour autoriser une sortie du dispositif de support (3, 3A, 3B) hors de la partie de boîtier (2) ; et
un bandeau frontal (4), destiné à actionner le mécanisme de verrouillage et de guidage (12-33), qui est placé en étant logé (11) de manière mobile sur la face avant du dispositif de réception (1), le mécanisme de verrouillage et de guidage (12-33) étant conçu pour amener le dispositif de support (3, 3A, 3B), par une première force externe (F1) exercée directement par un utilisateur du dispositif de réception sur le bandeau frontal (4) de l'état de fixation dans l'état de sécurité et par une deuxième force externe (F2) exercée directement par la suite par l'utilisateur sur le bandeau frontal (4) de l'état de sécurité dans l'état déverrouillé, et dans l'état de fixation, le bandeau frontal (4) débordant moins du dispositif de support (3, 3A, 3B) que dans l'état de sécurité et dans l'état déverrouillé,
le mécanisme de verrouillage et de guidage (12-33) comprenant un bras de levier (12), un galet de contact (14), un dispositif de déviation de force (16) conçu sous la forme d'un levier basculant, un premier dispositif de guidage (18) pourvu d'un galet de guidage (20), un deuxième dispositif de guidage (21), un support rotatif (23), un palier rotatif (24), un dispositif à force élastique (33) et une glissière (25) extractible, une extrémité du bras de levier (12) étant fixée sur le bandeau frontal, de telle sorte qu'un déplacement en rotation du bandeau frontal (4) soit converti en un déplacement en rotation ou en pivotement du bras de levier (12) et sur l'autre extrémité du bras de levier (12) qui est opposée au bandeau frontal (4) étant fixé un galet de contact (14) logé en rotation,
le galet de contact (14) étant placé et dimensionné de telle sorte qu'au moins dans l'état de fixation et dans l'état déverrouillé, il soit en contact mécanique permanent avec le dispositif de déviation de force (16), le dispositif de déviation de force (16) étant conçu sous la forme d'un levier basculant et par une articulation rotative (17), étant fixé en rotation sur un corps frontal (3B) du dispositif de support,
un bras de levier (16A) du dispositif de déviation de force (16) qui est dirigé vers le bandeau frontal (4) étant réalisé et placé de telle sorte qu'il se trouve dans le contact mécanique précédemment mentionné avec le galet de contact (14),
le bras de levier (16B) opposé au bandeau frontal (4) étant muni d'une broche de guidage (27), dont la position ou le déplacement est guidé(e) par un deuxième dispositif de guidage (21),
le support rotatif (23) étant fixé en rotation par le palier rotatif (24) sur une face interne de la partie de paroi latérale (2A) du boîtier (2),
le support rotatif (23) étant mécaniquement accouplé par l'intermédiaire de la glissière (25) extractible avec un corps de base (3A) du dispositif de support,
grâce à ce placement et à cet accouplement mécanique du support rotatif (23), du palier rotatif (24), de la glissière (25) extractible et du corps de base (3A) du dispositif de support, le dispositif de support (3) étant déplaçable en translation et en rotation par rapport au boîtier (2) et susceptible de sortir du boîtier (2) ou de rentrer dans celui-ci,
pour guider le déplacement en translation et en rotation du dispositif de support (3) par rapport au boîtier (2), le mécanisme de verrouillage et de guidage étant muni du premier dispositif de guidage (18) et du galet de guidage (20),
le galet de guidage (20) étant fixé en étant rotatif autour d'un axe de rotation sur le corps de base (3A) du dispositif de support et étant déplaçable le long d'un premier trajet de guidage (19) prédéterminé par le premier dispositif de guidage (18),
le premier dispositif de guidage (18) étant conçu sous la forme d'un évidement de matière ou d'un trou de passage conformé comme une large fente coudée dans la partie de paroi latérale (2a),
le premier trajet de guidage (19) prédéterminé par le premier dispositif de guidage (18) se composant d'une première partie (19A) de trajet de guidage associée à l'état de fixation et à l'état de sécurité et d'une deuxième partie (19B) de trajet de guidage associée à l'état déverrouillé,
la deuxième partie (19B) de trajet de guidage s'étendant en ligne droite et non incurvée, les parties (19A, 19B) de trajet de guidage définissant dans leur passage un angle obtus, supérieur de préférence à 100 degrés,
le déplacement en translation et/ou en rotation du dispositif de support (3) dans l'état déverrouillé, donc une sortie ou une rentrée du dispositif de support (3) hors du ou dans le boîtier (2) étant prédéterminé par le galet de guidage (20) guidé le long de la deuxième partie (19B) de trajet de guidage,
la deuxième partie (19B) de trajet de guidage ne s'écoulant pas à l'horizontale, mais en pente négative constante à partir du passage dans l'état déverrouillé jusqu'à la position extrême sortie,
la position extrême sortie du dispositif de support (3) étant fixée par une extrémité de la deuxième partie (19B) du trajet de guidage, dirigée vers la face avant du dispositif de réception,
le deuxième dispositif de guidage (21) du mécanisme de verrouillage et de guidage du dispositif de réception (1) étant réalisé pour guider la broche de guidage (27) fixée sur le bras de levier (16B) du dispositif de déviation de force (16) qui correspond à une partie du dispositif de déviation de force (16), le long d'un deuxième trajet de guidage (22) associé à l'état déverrouillé,
le deuxième dispositif de guidage (21) étant conçu sous la forme d'un évidement de matière ou d'un trou de passage conformé en fente dans la partie de paroi latérale (2A),
le deuxième trajet de guidage (22) du deuxième dispositif de guidage (21) étant conçu de telle sorte qu'une rotation du dispositif de déviation de force (16) par rapport au dispositif de support (3) soit bloquée pendant l'état de déverrouillage,
de ce fait, par l'intermédiaire du galet de contact (14) et du bras de levier (12), dans l'état déverrouillé, le bandeau frontal (4) étant fixé dans sa position débordant du dispositif de support (3),
la deuxième partie (19B) de trajet de guidage du premier dispositif de guidage (18) et le deuxième trajet de guidage (22) du deuxième dispositif de guidage (21), qui sont tous deux associés à l'état déverrouillé étant placés en étant décalés l'un par rapport à l'autre, en tant que trous de passage correspondants conformés en fente dans la partie de paroi latérale (2A),
sur l'extrémité du deuxième trajet de guidage (22) du deuxième dispositif de guidage (21) qui est opposée au bandeau frontal (4) étant mis à disposition un évasement (26) conformé en fente, orienté à angle droit par rapport au deuxième trajet de guidage (22), dans la partie de paroi latérale (2A), l'évasement (26) étant réalisé pour permettre un déplacement en rotation du dispositif de déviation de force (16) autour de son axe de rotation (17),
dans l'état de fixation, dans la position extrême rentrée, le dispositif de support (3) se trouvant dans une situation horizontale,
le galet de guidage (20) étant appuyé sur l'extrémité de la première partie (19A) de trajet de guidage du premier trajet de guidage (19) du premier dispositif de guidage (18),
le bandeau frontal (4) étant appliqué le plus près possible du corps frontal (3B) du dispositif de support, le galet de contact (14) étant en contact mécanique avec la partie d'extrémité extérieure du bras de levier (16A) du dispositif de déviation de force (16) et bloquant un déplacement du dispositif de déviation de force (16),
le dispositif à force élastique (33) mettant à disposition une force, qui lorsque le dispositif de déviation de force (16) n'est pas bloqué, engendrerait une rotation du dispositif de déviation de force dans le sens anti-horaire,
grâce à la force mise à disposition, le bras de levier (16a) étant appuyé plus fortement contre le galet de contact (14), suite à quoi la fixation du dispositif de support (3) dans la position extrême rentrée est renforcée,
ceci permettant que le dispositif de réception reste en toute sécurité dans l'état de fixation, même si un fluide est appliqué sous haute pression, par exemple par un dispositif d'alimentation de fluide (50) sur le dispositif de support (3) ou sur un composant alimentaire réceptionné dans celui-ci,
la broche de guidage (27) se trouvant dans l'évasement (26), pour autoriser une rotation du dispositif de déviation de force (16) et donc également un déplacement du bandeau frontal (4) par rapport au dispositif de support (3) par une force externe appliquée sur le bandeau frontal (4),
l'état de sécurité du dispositif de support (3) et du mécanisme de verrouillage et de guidage résultant de l'exercice par l'utilisateur, dans l'état de fixation sur le bandeau frontal (4) du dispositif de réception (1) de la première force externe (F1), qui au début est orientée dans la direction d'une sortie du dispositif de support et qui mène à une rotation du bandeau frontal (4) dans un état débordant du dispositif de support (3), le cap de la force (F1) correspondant à la rotation du bandeau frontal (4), pour permettre ladite rotation du bandeau frontal (4), le bras de levier (16A) étant muni d'une partie superficielle (16C) en cuvette, le long de laquelle, lors de la rotation du bandeau frontal (4), le galet de contact (14) est guidé dans la position débordant du dispositif de support (3),
le déplacement en rotation du bandeau frontal (4) dans le sens horaire en découlant, avec un déplacement en rotation du dispositif de déviation de force (16) autour de l'axe de rotation du palier rotatif (17) dans le sens antihoraire et un déplacement en rotation dans le sens antihoraire du dispositif de support (3), sur lequel le dispositif de déviation de force (16) est fixé de manière mobile,
ce déplacement en rotation du dispositif de support (3) d'environ 5 degrés, qui a pour effet d'abaisser et d'incliner le dispositif de support (3) en comparaison de la situation horizontale étant guidé par le galet de guidage (20), guidé dans la première partie (19A) de trajet de guidage du premier dispositif de guidage (18), l'ampleur du déplacement étant également définie par la force élastique mise à disposition par le dispositif à force élastique (33),
la broche de guidage (27) étant amenée par le déplacement du dispositif de déviation de force (16) au début du deuxième trajet de guidage (22) du deuxième dispositif de guidage (21),
l'état déverrouillé du dispositif de support (3) et du mécanisme de verrouillage et de guidage étant donné, lorsque dans l'état de sécurité, suite à la force externe (F1) est appliquée par l'utilisateur sur le bandeau frontal (4) du dispositif de réception (1) la deuxième force externe (F2) qui appuie vers le bas le dispositif de support,
la deuxième force externe (F2) étant orientée ainsi vers le bas et à la transversale de la direction d'une sortie du dispositif de support (3),
la deuxième force externe (F2) devant être suffisamment importante, pour surmonter une force antagoniste mise à disposition par le dispositif à force élastique (33) dans l'état de sécurité, qui empêche une rotation de part et d'autre du dispositif de support (3) au-delà de la rotation déjà effectuée d'un premier angle (W1) d'environ 5 degrés, et pour amener le galet de guidage (20) de la première partie (19A) du trajet de guidage dans la deuxième partie (19B) du trajet de guidage du premier dispositif de guidage (18), qui au passage de l'un à l'autre, définissent un angle obtus, ;
par application de la deuxième force externe (F2), le dispositif de support (3) étant tourné, en comparaison de l'état de sécurité, en sus de la rotation autour du premier angle (W1) d'environ 5 degrés lors du passage de l'état de fixation dans état de sécurité de la valeur d'un deuxième angle (W2) supplémentaire d'environ 5 degrés dans la même direction de rotation,
dans l'état déverrouillé, lors de la sortie ou de la rentrée le long de la deuxième partie (19B) du trajet de guidage du premier dispositif de guidage (18), le dispositif de support (3) étant guidé par le galet de guidage (20) fixé sur le dispositif de support (3),
en comparaison de la situation horizontale du dispositif de support (3), dans l'état de fixation, le dispositif de support (3) étant abaissé ou incliné dans l'état déverrouillé de la valeur de la somme du premier et du deuxième angles (W1, W2), donc d'approximativement 10 degrés.

2. Dispositif de réception (1) selon la revendication 1, le mécanisme de verrouillage et de guidage (12-33) étant réalisé pour ramener automatiquement le dispositif de support (3, 3A, 3B) dans l'état de sécurité si directement après l'atteinte de l'état de déverrouillage, aucune troisième force externe (F3) pour extraire le dispositif de support (3) n'est directement exercée par l'utilisateur sur le bandeau frontal (4),
pour que l'état déverrouillé reste maintenu, directement après l'exercice de la deuxième force externe (F2), une troisième force externe (F3) devant être exercée par l'utilisateur sur le bandeau frontal (4),
la troisième force externe (F3) étant orientée en direction du dispositif de support (3),
sans exercice de la force externe (F3), le dispositif de support (3) étant ramené par la force du dispositif à force élastique (33) dans l'état de sécurité.

3. Dispositif de réception (1) selon l'une quelconque des revendications 1 à 2, le mécanisme de verrouillage et de guidage (12-33) étant réalisé pour le déplacement en translation et/ou en rotation guidé du dispositif de support (3, 3A, 3B) de l'état de sécurité dans l'état de fixation, en réaction à une quatrième force externe (F4), exercée par l'utilisateur directement sur le bandeau frontal, notamment en direction d'une rentrée du dispositif de support dans le boîtier, conjointement avec un déplacement du bandeau frontal (4) par rapport au dispositif de support (3, 3A, 3B).

4. Dispositif de réception (1) selon l'une quelconque des revendications 1 à 3, qui est conçu pour des contraintes externes d'au moins 1000 Newton du dispositif de support (3, 3A, 3B) dans la position extrême sortie.

5. Dispositif de réception (1) selon l'une quelconque des revendications 1 à 4, le dispositif de réception étant réalisé sans système électrique ni électronique.

6. Dispositif de réception (1) selon l'une quelconque des revendications 1 à 5, le disposition de réception comportant un dispositif d'alimentation de fluide (50), destiné à mettre à disposition un fluide, notamment de l'eau ou de la vapeur, ou étant susceptible d'être accouplé avec celui-ci et le dispositif de réception étant placé et réalisé pour accueillir le fluide mis à disposition par le dispositif d'alimentation de fluide (50), et pour alimenter le fluide vers le dispositif de support (3, 3A, 3B), notamment vers au moins un composant alimentaire réceptionné dans celui-ci, uniquement dans l'état de fixation.

7. Appareil de préparation d'un produit alimentaire (100), doté d'un dispositif de réception (1) selon l'une quelconque des revendications 1 à 6, l'appareil de préparation d'un produit alimentaire étant prévu notamment pour un office d'un aéronef.

8. Appareil de préparation d'un produit alimentaire (100) selon la revendication 7, doté d'une partie superficielle (101) placée sur la face avant de l'appareil de préparation d'un produit alimentaire, dans laquelle est intégré le bandeau frontal (4) du dispositif de réception (1), dans l'état de sécurité, le bandeau frontal (4) débordant de la partie superficielle (101) et dans l'état de fixation, ne débordant pas de la partie superficielle (101).
